# FASCICULE DE BREVET EUROPEEN

(11) **EP 1 956 256 B1**
(45) Date de publication et mention de la délivrance du brevet: **12.01.2011**
(21) Numéro de dépôt: 08290108.3
(22) Date de dépôt: 06.02.2008
(51) Int. Cl.: F16C 33/38, F16C 33/48, F16C 33/66

(54) **Cage de rétention à réserve de lubrifiant solide comprenant un espace dans les logements de rétention**
Verwahrungsgehäuse für feste Schmiermittelreserve, die einen Raum im Sitz des Verwahrungsgehäuses umfasst
Retention cage with reserve of solid lubricant comprising a space in the retention housings

(30) Priorité: 09.02.2007 FR 0700949
(43) Date de publication de la demande: 13.08.2008
(73) Titulaire: S.N.R. ROULEMENTS, 74000 Annecy (FR)
(72) Inventeur: Lenon, Hervé, 74540 Gruffy (FR); Mermoud, Gérard, 74330 La Balme de Sillingy (FR)
(74) Mandataire: Sayettat, Julien Christian

(56) Documents cités:
- FR-A- 2 773 857
- JP-A- 61 215 811
- US-A- 3 743 369
- US-A1- 2004 057 644

## Description

L'invention concerne une cage de rétention des corps roulants dans un palier à roulement, ainsi qu'un palier à roulement comprenant une telle cage.

L'invention s'applique à des paliers à roulement qui sont lubrifiés par une matrice solide poreuse contenant un lubrifiant, ladite matrice étant disposée autour des corps roulants pour alimenter en lubrifiant les chemins de roulement.

Ce type de lubrification permet de rendre autonome le palier relativement à sa lubrification de sorte à améliorer sa durée de vie en évitant notamment les états de fonctionnement en régime de sous lubrification.

Toutefois, la présence de la matrice solide poreuse autour des corps roulants induit un couple résistant qui est préjudiciable en termes d'énergie dissipée par la rotation du palier. En outre, les pertes d'énergie sont d'autant plus importantes que la matrice solide poreuse enserre les corps roulants, ce qui est pourtant avantageux relativement à leur alimentation en lubrifiant au plus près des chemins de roulement.

Par ailleurs, les réalisations selon l'art antérieur comme décrit dans le document US 2004/057644 ne permettent pas de garantir dans le temps le bon positionnement de la matrice solide poreuse sur la cage, celle-ci n'étant pas accrochée mécaniquement et subissant les efforts de rotation.

L'invention a pour but de résoudre les problèmes de l'art antérieur en proposant notamment une cage de rétention pour palier à roulement comprenant une matrice solide poreuse contenant un lubrifiant, ladite cage permettant de disposer la matrice solide poreuse de sorte à améliorer la lubrification des chemins de roulement ainsi que la fiabilité du positionnement de ladite matrice solide poreuse sur ladite cage.

A cet effet, et selon un premier aspect, l'invention propose une cage de rétention des corps roulants dans un palier à roulement, ladite cage comprenant un corps annulaire dont la face avant est pourvue de logements présentant une paroi sur laquelle un corps roulant est destiné à être retenu en contact glissant, ledit corps comprenant en outre une réserve de lubrifiant, dans laquelle la réserve de lubrifiant comprend d'une part des canaux de lubrification qui mettent en communication chacun des logements avec la face arrière du corps annulaire et d'autre part des espaces qui sont formés dans respectivement un logement, lesdits espaces étant délimités chacun par une paroi arrière, au moins un canal de lubrification débouchant dans chacune desdites parois.

Selon un deuxième aspect, l'invention propose une telle cage de rétention, dans laquelle une matrice solide poreuse contenant un lubrifiant est disposée dans la réserve de lubrifiant en remplissant les canaux et les espaces.

Selon un troisième aspect, l'invention propose un palier à roulement comprenant un organe fixe, un organe tournant et des corps roulants disposés entre lesdits organes pour permettre leur rotation relative, les corps roulants étant retenus dans le palier par disposition dans les logements d'une telle cage.

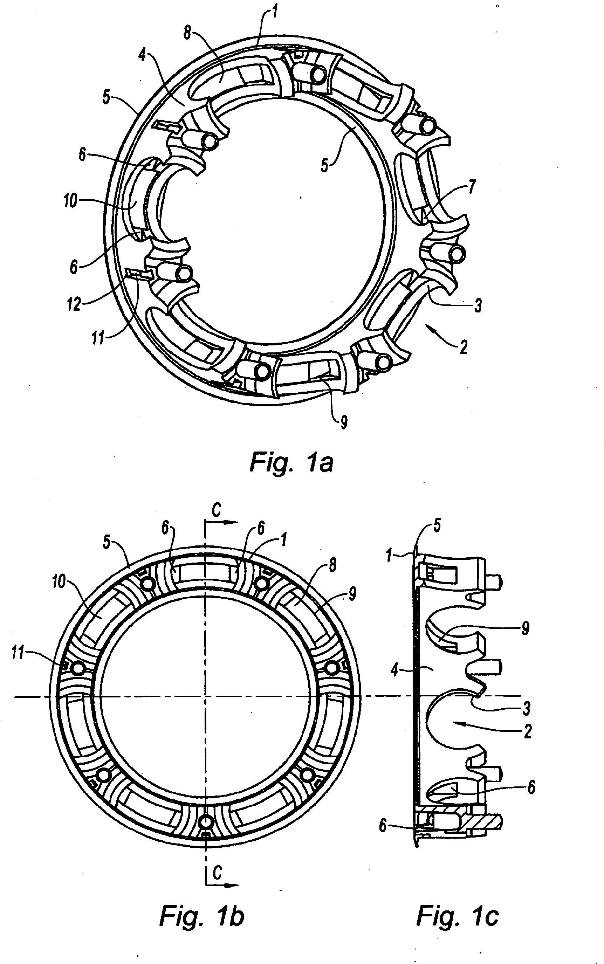

D'autres objets et avantages de l'invention apparaîtront dans la description qui suit, faite en référence aux figures jointes dans lesquelles les figures 1 montrent une cage de rétention selon un premier mode de réalisation de l'invention, respectivement en perspective vue de la face avant (figure 1a), de face (figure 1b) et en coupe selon la ligne C-C de la figure 1b (figure 1c).

En relation avec les figures, on décrit ci-dessous une cage de rétention des corps roulants dans un palier à roulement, lesdites cages étant destinées à être utilisées en combinaison avec une matrice solide poreuse contenant un lubrifiant de sorte à assurer la lubrification des chemins de roulement.

La cage de rétention comprend un corps annulaire 1 qui peut être réalisé en matière plastique thermoplastique, notamment en polyamide renforcé par des fibres de verre, mais également en tôle métallique. La face avant du corps annulaire 1 est pourvue de logements 2 présentant une paroi 3 formant une surface sur laquelle un corps roulant (non représenté) est destiné à être retenu en contact glissant.

Dans le mode de réalisation représenté, les corps roulants sont des billes et les logements 2 présentent une forme sensiblement hémisphérique de taille correspondante, sans toutefois que l'invention ne soit limitée à cette réalisation particulière. Plus précisément, les logements 2 sont répartis sur la face avant du corps annulaire 1 en étant séparés des deux logements 2 adjacents par respectivement un pont de matière 4 qui s'étend en saillie axiale vers l'avant. Ainsi, chaque logement 2 comprend une paroi 3 de roulement formée d'une partie de fond réalisée sur la face avant du corps annulaire 1 et de deux parties latérales formées sur les ponts de matière 4.

En outre, la cage représentée comprend sur sa face arrière un déflecteur annulaire 5 s'étendant généralement radialement. Ce type de cage est particulièrement adapté pour être intégré dans un roulement de dispositifs de transmission de couple tels que les boîtes de vitesses de véhicule automobile. En effet, dans ces applications, le roulement est lubrifié par projection du lubrifiant du dispositif et il convient d'empêcher les éventuels polluants dudit lubrifiant de pénétrer à l'intérieur du roulement, notamment dans les chemins de roulement. Pour ce faire, le déflecteur 5 est disposé en regard d'une paroi du roulement avec un jeu suffisamment faible pour assurer une filtration du lubrifiant pénétrant dans le roulement.

Le corps annulaire 1 comprend également une réserve de lubrifiant, ladite réserve étant pourvue de canaux de lubrification 6 qui mettent en communication chacun des logements 2 avec la face arrière du corps 1. En particulier, chaque canal de lubrification 6 est prévu pour déboucher dans la paroi d'un logement 2.

Ainsi, par disposition de la matrice solide poreuse dans les canaux de lubrification 6, il est possible d'alimenter directement les chemins de roulement en lubrifiant. Et, les canaux de lubrification 6 débouchant sur la face arrière du corps annulaire 1, il en résulte un enrobage de la cage par la matrice solide poreuse, ce qui limite l'enserrement des corps roulants par la matrice solide poreuse et donc le couple résistant induit.

En effet, la matrice solide poreuse est classiquement formée en coulant un polymère liquide chargé de lubrifiant dans la réserve de lubrifiant, puis en polymérisant celui-ci de sorte à assurer sa rigidification. Lors de cette étape, généralement réalisée à chaud, il se produit un rétrécissement de la matrice solide poreuse dans la réserve, ce qui contribue au positionnement et à l'accrochage de la matrice solide poreuse dans le roulement. Ainsi, il est possible de réaliser une matrice solide poreuse contenant un lubrifiant qui présente une forme maitrisée en fonction de celle de la réserve de lubrifiant.

En relation avec les figures, la réserve de lubrifiant comprend un espace arrière 7 qui est formé sur la face arrière du corps annulaire 1, les canaux de lubrification 6 débouchant dans ledit espace. En particulier, l'espace 7 présente une forme annulaire de sorte à réaliser une couronne de matrice solide poreuse.

Cette réalisation permet d'améliorer la durée de vie du roulement en augmentant la capacité de la réserve de lubrifiant, et ce sans modifier la dimension de la cage ni le nombre de corps roulants retenus. En outre, la couronne arrière contribue à l'accrochage de la matrice solide poreuse sur la cage de rétention.

Par ailleurs, deux canaux de lubrification 6 sont formés de part et d'autre de l'axe de chacun des logements 2 de sorte à alimenter le chemin de roulement en lubrifiant en deux points symétriques par rapport à cet axe. Dans le mode de réalisation représenté, les canaux 6 sont formés de part et d'autre de la partie de fond de la paroi 3. En outre, les canaux 6 s'étendent selon une direction axiale par rapport à l'axe du corps annulaire 1. En variante, on pourrait prévoir des canaux 6 à direction inclinée de sorte à mieux retenir la matrice solide poreuse sur ledit corps relativement à un déplacement de ladite matrice suivant ledit axe.

La réserve de lubrifiant comprend également des espaces 8 qui sont formés dans respectivement un logement 2. Plus précisément, un espace 8 est formé dans une gorge périphérique 9 qui est réalisée dans la partie de fond de la paroi 3. Un espace (8) est délimité par une paroi arrière 10, chacune desdites parois étant interposée entre l'espace arrière 7 et l'espace 8 des logements. Par ailleurs, les canaux de lubrification 6 débouchent dans le logement 2 de part et d'autre de la paroi 10.

Ainsi, la matrice solide poreuse enrobe la paroi arrière 10, la face avant de l'enrobage formant surface de roulement et la face arrière dudit enrobage étant intégrée dans la couronne de matrice solide poreuse. Cette réalisation permet donc une bonne lubrification en augmentant la surface de contact entre le lubrifiant et les corps roulants. En outre, on obtient également une amélioration de l'accrochage de la matrice solide poreuse par l'intermédiaire du surmoulage des parois 10, ainsi qu'un bon positionnement de ladite matrice par rapport aux corps roulants.

La réserve de lubrifiant peut comprendre en outre au moins un canal d'accrochage 11 qui débouche sur la face extérieure et/ou sur la face intérieure du corps annulaire 1. Selon les figures, un canal d'accrochage 11 est prévu dans chacun des ponts de matière 4, lesdits canaux débouchant sur la face extérieure du corps annulaire 1. Plus précisément, le canal d'accrochage 11 s'étend sensiblement axialement sur une partie de la face extérieure de sorte à former une surface arrière 12 de butée pour la matrice solide poreuse. Ainsi, les canaux 11 permettent l'accrochage de la matrice solide poreuse sur la cage, notamment relativement à un déplacement axial de ladite matrice par rapport à la cage.

En variante non représentée, on pourrait prévoir un canal 11 radial traversant de part en part chaque pont de matière 4, depuis la face intérieure jusqu'à la face extérieure de sorte à former une cheville d'accrochage avec la matrice solide poreuse. Dans cette réalisation, comme dans les autres, on peut prévoir de renforcer la matrice solide poreuse en fonction des contraintes mécaniques particulières qu'elle aura à subir.

La cage de rétention selon l'invention présente l'avantage de pouvoir, préalablement à sa disposition dans un palier, être pourvue d'un lubrifiant solide formé d'une matrice solide poreuse contenant le lubrifiant. En effet, la matrice peut être disposée dans la réserve de lubrifiant en remplissant les canaux 6, 11 et les espaces 7, 8, puis être solidifiée de sorte à obtenir une cage pourvue du moyen de lubrifiant du palier dans lequel elle est destinée à être disposée. Pour ce faire, un polymère liquide chargé en lubrifiant est injecté dans la cage pour permettre le remplissage de la réserve de lubrifiant, puis réticulé afin de former la matrice solide poreuse.

L'invention concerne également un palier à roulement, notamment un roulement, qui comprend un organe fixe, un organe tournant et des corps roulants disposés entre lesdits organes pour permettre leur rotation relative. Les corps roulants sont retenus dans le palier par disposition dans les logements 2 d'une cage de rétention telle que décrite ci-dessus. La lubrification est alors obtenue par la matrice solide poreuse qui est apte à libérer dans le temps le lubrifiant. En outre, comme indiqué ci-dessus, la disposition de la matrice solide poreuse dans la réserve de lubrifiant peut être réalisée préalablement au montage du palier, ou postérieurement à celui-ci.

## Revendications

1. Cage de rétention des corps roulants dans un palier à roulement, ladite cage comprenant un corps annulaire (1) dont la face avant est pourvue de logements (2) présentant une paroi (3) sur laquelle un corps roulant est destiné à être retenu en contact glissant, ledit corps comprenant en outre une réserve de lubrifiant, ladite cage étant **caractérisée en ce que** la réserve de lubrifiant comprend d'une part des canaux de lubrification (6) qui mettent en communication chacun des logements (2) avec la face arrière du corps annulaire (1) et d'autre part des espaces (8) qui sont formés chacun dans un logement (2), lesdits espaces étant délimités chacun par une paroi arrière (10), au moins un canal de lubrification (6) débouchant dans chacune desdites parois.

2. Cage de rétention selon la revendication 1, **caractérisée en ce que** deux canaux de lubrification (6) sont formés de part et d'autre de l'axe de chacun des logements (2).

3. Cage de rétention selon la revendication 1 ou 2, **caractérisée en ce qu'**un espace (8) est formé dans une gorge périphérique (9) qui est réalisée dans la partie de fond de la paroi (3) d'un logement (2).

4. Cage de rétention selon l'une quelconque des revendications 1 à 3, **caractérisée en ce que** la réserve de lubrifiant comprend en outre un espace (7) qui est formé sur la face arrière du corps annulaire (1), les canaux de lubrification (6) débouchant dans ledit espace.

5. Cage de rétention selon la revendication 4, **caractérisée en ce que** les parois arrières (10) sont interposées entre l'espace arrière (7) et chacun des espaces (8) des logements.

6. Cage de rétention selon l'une quelconque des revendications 1 à 5, **caractérisée en ce que** la réserve de lubrifiant comprend en outre au moins un canal d'accrochage (11) qui débouche sur la face extérieure et/ou sur la face intérieure du corps annulaire (1).

7. Cage de rétention selon l'une quelconque des revendications 1 à 6, dans laquelle une matrice solide poreuse contenant un lubrifiant est disposée dans la réserve de lubrifiant en remplissant les canaux (6, 11) et les espaces (7, 8).

8. Palier à roulement comprenant un organe fixe, un organe tournant et des corps roulants disposés entre lesdits organes pour permettre leur rotation relative, les corps roulants étant retenus dans le palier par disposition dans les logements (2) d'une cage selon la revendication 7.

## Claims

1. Retention cage for rolling bodies in a rolling bearing, said cage comprising an annular body (1) the front face of which is provided with housings (2) having a wall (3) on which a rolling body is intended to be held in sliding contact, said body also comprising a reserve of lubricant, said cage being **characterised in that** the reserve of lubricant comprises firstly lubrication channels (6) that put each of the housings (2) in communication with the rear face of the annular body (1) and secondly spaces (8) that are each formed in a housing (2), said spaces each being delimited by a rear wall (10), at least one lubrication channel (6) emerging in each of said walls.

2. Retention cage according to claim 1, **characterised in that** two lubrication channels (6) are formed on either side of the axis of each of the housings (2).

3. Retention cage according to claim 1 or 2, **characterised in that** a space (8) is formed in a peripheral groove (9) that is produced in the bottom part of the wall (3) of a housing (2).

4. Retention cage according to any one of claims 1 to 3, **characterised in that** the reserve of lubricant also comprises a space (7) that is formed on the rear face of the annular body (1), the lubrication channels (6) emerging in said space.

5. Retention cage according to claim 4, **characterised in that** the rear walls (10) are interposed between the rear space (7) and each of the spaces (8) of the housings.

6. Retention cage according to any one of claims 1 to 5, **characterised in that** the reserve of lubricant also comprises at least one attachment channel (11) that emerges on the external face and/or on the internal face of the annular body (1).

7. Retention cage according to any one of claims 1 to 6, wherein a porous solid matrix containing a lubricant is disposed in the reserve of lubricant, filling the channels (6, 11) and the spaces (7, 8).

8. Rolling bearing comprising a fixed member, a rotating member and rolling bodies disposed between said members to allow relative rotation thereof, the rolling bodies being retained in the bearing by arrangement in the housings (2) of a cage according to claim 7.

## Patentansprüche

1. Käfig zum Halten der Wälzkörper in einem Wälzlager, wobei der Käfig einen Ringkörper (1) umfasst, dessen Vorderseite mit Aufnahmen (2) versehen ist, die eine Wand (3) aufweisen, auf der ein Wälzkörper dazu gedacht ist, in Gleitkontakt gehalten zu werden, wobei der Körper ferner einen Schmiermittelvorrat umfasst, wobei der Käfig **dadurch gekennzeichnet, dass** der Schmiermittelvorrat einerseits Schmierkanäle (6), die jede der Aufnahmen (2) mit der Rückseite des Ringkörpers (1) in Verbindung setzen, und andererseits Räume (8), die jeder in einer Aufnahme (2) gebildet sind, umfasst, wobei die Räume jeweils durch eine Rückwand (10) begrenzt sind, wobei mindestens ein Schmierkanal (6) in jede der Wände einmündet.

2. Haltekäfig nach Anspruch 1, **dadurch gekennzeichnet, dass** zwei Schmierkanäle (6) auf beiden Seiten der Achse jeder der Aufnahmen (2) gebildet sind.

3. Haltekäfig nach Anspruch 1 oder 2, **dadurch gekennzeichnet, dass** ein Raum (8) in einer umlaufenden Rille (9) gebildet ist, die in dem Bodenteil der Wand (3) einer Aufnahme (2) ausgebildet ist.

4. Haltekäfig nach einem der Ansprüche 1 bis 3, **dadurch gekennzeichnet, dass** die Schmiermittelreserve ferner einen Raum (7) umfasst, der auf der Rückseite des Ringkörpers (1) gebildet ist, wobei die Schmierkanäle (6) in den Raum einmünden.

5. Haltekäfig nach Anspruch 4, **dadurch gekennzeichnet, dass** die Rückwände (10) zwischen dem hinteren Raum (7) und jedem der Räume (8) der Aufnahmen eingeschoben sind.

6. Haltekäfig nach einem der Ansprüche 1 bis 5, **dadurch gekennzeichnet, dass** der Schmiermittelvorrat ferner mindestens einen Anhängekanal (11) umfasst, der auf der Außenseite und/oder der Innenseite des Ringkörpers (1) einmündet.

7. Haltekäfig nach einem der Ansprüche 1 bis 6, wobei eine poröse massive Grundmasse, die ein Schmiermittel enthält, in dem Schmiermittelvorrat angeordnet ist, wobei sie die Kanäle (6, 11) und die Räume (7, 8) ausfüllt.

8. Wälzlager, umfassend ein feststehendes Organ, ein drehbares Organ und Wälzkörper, die zwischen den Organen angeordnet sind, um ihre relative Drehung zu erlauben, wobei die Wälzkörper in dem Lager durch Anordnung in den Aufnahmen (2) eines Käfigs nach Anspruch 7 festgehalten werden.
